# EUROPÄISCHE PATENTSCHRIFT

(11) **EP 1 847 427 B1**
(45) Veröffentlichungstag und Bekanntmachung des Hinweises auf die Patenterteilung: **03.11.2010**
(21) Anmeldenummer: 06008367.2
(22) Anmeldetag: 22.04.2006
(51) Int. Cl.: B60S 3/06, B60S 3/04

(54) **Vorrichtung zum Waschen von Fahrzeugen**
Apparatus for washing vehicles
Installation pour le lavage des véhicules

(43) Veröffentlichungstag der Anmeldung: 24.10.2007
(73) Patentinhaber: WashTec Holding GmbH, 86153 Augsburg (DE)
(72) Erfinder: Soria, Alberto, 10123 Torino (TO) (IT)
(74) Vertreter: Rapp, Bertram

(56) Entgegenhaltungen:
- AU-A- 2 719 471
- DE-A1- 19 532 097
- US-A- 4 798 217
- US-A- 5 613 260
- US-A1- 2005 028 846
- PATENT ABSTRACTS OF JAPAN Bd. 1997, Nr. 04, 30. April 1997 (1997-04-30) -& JP 08 324392 A (MK SEIKO CO LTD), 10. Dezember 1996 (1996-12-10)

## Beschreibung

Die vorliegende Erfindung betrifft eine Vorrichtung zum Waschen von Fahrzeugen nach dem Oberbegriff des Anspruchs 1.

Derzeit sind auf dem Markt Vorrichtungen verfügbar, die es ermöglichen, in automatischer Weise Fahrzeuge zu waschen, wie zum Beispiel Kraftfahrzeuge, Kleintransporter, Lieferwägen, Wägen im Allgemeinen usw.

Gewöhnlich umfassen solche Vorrichtungen eine Vielzahl von sich automatisch drehenden Bürsten, mit Wasser und/oder einer Waschmittelflüssigkeit gespeiste Düsen und Gebläse zum Trocknen des Fahrzeugs. Die Bürsten, die Düsen und die Gebläse sind in "Stationen" im Inneren einer Struktur zusammengestellt, die sich im Wesentlichen als Tunnel oder wie eine Folge von "Portalen" erstreckt.

Das zu waschende Fahrzeug wird in den Tunnel oder durch die Portale durch eine mechanische Fördereinrichtung transportiert, beispielsweise einen Riemen, der ein Vorderrad des Fahrzeugs, das im Leerlauf gelassen ist, zieht. Jede Station hat die Funktion, eine spezielle Behandlung am Fahrzeug durchzuführen. Beispielsweise kann der Tunnel eine Vorwäschestation, eine Bürstenwaschstation, eine Spülstation und eine Station zum Endtrocknen umfassen. Das gewaschene Fahrzeug wird zur Rückgabe an den Kunden von der Fördereinrichtung außerhalb die Tunnelvorrichtung transportiert.

Die Tunnel- oder Portalvorrichtung, die gewöhnlich in Servicestationen, an Plätzen von Einkaufszentren usw. installiert ist, ermöglicht es, Fahrzeuge in schneller Zeit zu waschen, ohne dass die Teilnahme seitens der Angestellten erforderlich ist.

Die rotierenden Bürsten sind horizontal und vertikal an beweglichen Haltern montiert. Mindestens zwei vertikale Bürsten (nämlich mit im Wesentlichen vertikaler Drehachse) haben gewöhnlich alle die Funktion, eine Seite des Fahrzeugs zu bürsten, während mindestens eine horizontale Bürste (horizontale Drehachse), die quer zur Transportrichtung des Fahrzeugs im Tunnel abgestützt ist, die Funktion hat, die Motorhaube, die Windschutzscheibe, das Verdeck, die Heckscheibe und eventuell den Kofferraum des Fahrzeugs zu bürsten.

Bei den vorherigen herkömmlichen bekannten Waschvorrichtungen ist der Abstützarm der horizontalen Bürsten eine an der Tunnelstruktur oder an der verwandten Portalstruktur befestigte Querstrebe, um über dem Wagen in der Verlaufsrichtung des Tunnels schwingen zu können, wobei sie mit der Karosserie durch die Wirkung der Schwerkraft, die auf den Arm und auf die Bürste wirkt, in Kontakt bleibt. Mit anderen Worten, die horizontale Bürste ist wie ein Pendel am oberen Teil der Struktur der Vorrichtung befestigt und schwingt über dem in Bewegung befindlichen Fahrzeug durch die Karosserie des Fahrzeugs selbst geschoben, wobei sie dennoch mit dem Fahrzeug in Kontakt bleibt und der Kontur folgt.

In den letzten Jahren wurde diese technische Lösung aufgegeben, um die Qualität des Waschens zu verbessern. Bei den jüngeren Waschvorrichtungen sind die Halter oder die Querstrebe durch Motoren oder durch äquivalente Servomechanismen betätigt, um die zugehörige rotierende Bürste in Kontakt mit der Karosserie des Fahrzeugs zu führen. Während des Transports des Fahrzeugs im Tunnel oder zwischen den Portalen nähert sich der Abstützhalter der vertikalen Bürsten seitlich dem Fahrzeug, während die Abstützquerstrebe der horizontalen Bürste sich der Karosserie des Fahrzeugs von oben mit einer ausschließlich vertikalen Bewegung nähert. In dieser Ausführungsform wird die horizontale Bürste tatsächlich im Allgemeinen durch eine Querstrebe abgestützt, deren Enden gleitend an den Pfosten des betreffenden Portals oder an den Wänden des Tunnels befestigt sind.

Die Bewegung der Halter oder der Querstrebe zur Abstützung der Bürste wird durch ein entsprechendes Steuersystem beeinflusst, das eine Vielzahl von Sensoren, beispielsweise Positions- und/oder Nähesensoren, Photozellen usw. umfasst. In dieser Form ist es möglich, die Halter und die Querstrebe so zu bewegen, dass der Kontakt zwischen der Bürste und der Karosserie des Fahrzeugs für alle Fahrzeuge unabhängig von der Form der betreffenden Karosserie optimal ist. Mit anderen Worten, die Halter und die Querstrebe werden derart bewegt, dass die Bürste der Form der Karosserie des Fahrzeugs im Tunnel während seines Transports folgt. Das Steuersystem verhindert, dass sich die Bürsten der Karosserie übermäßig nähern oder dass die betreffenden Halter (oder die Querstrebe) zur Abstützung mit derselben in beschädigenden Kontakt kommen.

Die Sensoren erfassen die Position des Fahrzeugs und der Bürsten und erzeugen ein Signal, das vom Steuersystem zur Rückkopplungsbetätigung der Motoren der Halter und der Querstrebe geeignet verarbeitet wird.

Ein Steuersystem, das zu jenem analog ist, das von den Bürsten verwendet wird, ist für die Steuerung der Bewegung zumindest teilweise der Düsen vorgesehen, mit denen die herkömmlichen Waschvorrichtungen versehen sind.

Bei den herkömmlichen Waschvorrichtungen ist die Vorwaschstation, die eine der Anfangsstationen ist, mit einer Vielzahl von Düsen versehen, die eine Flüssigkeit unter Druck auf das Fahrzeug zum Zweck lenken, eine erste Reinigung der Karosserie zu bewirken. Die Flüssigkeit ist gewöhnlich Wasser oder ein Waschmittel oder ein Gemisch der zwei Flüssigkeiten.

In letzter Zeit ist die Verwendung von Vorwaschstationen, die mit Düsen versehen sind, die mit Flüssigkeiten mit hohem Druck, im Allgemeinen Wasser, gespeist werden, deren Druck im Intervall von 60 - 80 bar liegt, üblich geworden. Diese Konfiguration hat sich als besonders wirksam erwiesen, was die Qualität des Waschens der Fahrzeuge betrifft.

Die Düsen der Vorwaschstation sind gewöhnlich fest an einer horizontalen Querstrebe angeordnet, die quer zur Transportrichtung der Fahrzeuge der Vorrichtung angeordnet ist. Die Querstrebe bewegt sich vertikal, wobei sie an ihren Enden an zwei Stützen eines Portals befestigt ist, das eigens für ihre Abstützung vorgesehen ist. Die Düsen lenken die Waschflüssigkeit in Richtung des Fahrzeugs, das in Richtung der Station gezogen wird.

Anfänglich befindet sich der Halter in seiner unteren Position, beispielsweise in der Höhe des Kühlergrills des zu waschenden Kraftfahrzeugs, und die Düsen treffen den Vorderteil des Fahrzeugs mit ihren jeweiligen Strahlen. Beim Transport des Fahrzeugs in Richtung der Querstrebe zur Abstützung der Düsen, wenn sich der Abstand auf ein vordefiniertes Intervall verringert, unternimmt das Steuersystem die Betätigung der Motoren, die die vertikale Bewegung der Querstrebe steuern. Die Querstrebe wird angehoben, um den Durchgang des Kraftfahrzeugs durch die Vorwaschstation unterhalb der Düsen zu ermöglichen. Anschließend kehrt die Querstrebe in die Anfangsposition zurück, um einen neuen Waschzyklus an einem anderen Fahrzeug einzuleiten.

Die Verschiebung der Querstrebe wird vom Steuersystem so kalibriert, dass der Abstand der Düsen von der Karosserie des Fahrzeugs im Wesentlichen konstant bleibt. Das Steuersystem macht von geeigneten Sensoren für die Messung der Position des Fahrzeugs und der Querstrebe zur Abstützung der Düsen, beispielsweise Positionssensoren, Nähesensoren, Photozellen usw., und von einer Einheit, die die Form des Profils des Fahrzeugs speichert, Gebrauch.

Die herkömmlichen Waschvorrichtungen haben verschiedene Nachteile, die vor allem mit der Zuverlässigkeit der Komponenten und der Waschqualität, nämlich mit der Wirksamkeit der Reinigung der Karosserie des behandelten Fahrzeugs, verbunden sind.

Das Steuersystem der Bewegung der Halter und der Querstrebe, das die Bürsten oder die Düsen abstützt, ist leicht für Fehler anfällig. Die Atmosphäre im Inneren des Tunnels oder jedenfalls in der Nähe der Vorrichtung in Betrieb ist besonders feucht. Die Düsen zerstäuben tatsächlich große Mengen von Flüssigkeit, typischerweise Wasser, das sich in die Luft verflüchtigt, wobei es auch das eventuell mit dem Wasser vermischte Waschmittel, das ansonsten auf der Karosserie des Fahrzeugs vorliegt, transportiert. Unter diesen Bedingungen verschmutzen die Sensoren leicht, die metallischen Komponenten und die elektrischen Verbindungen oxidieren ebenso wie die elektronischen Schaltungen. Mit anderen Worten, wenn die Waschvorrichtung in Betrieb ist, ist die Atmosphäre, in der das Steuersystem arbeitet, aggressiv und ruft mit der Zeit leicht Funktionsstörungen hervor.

Das Steuersystem ist außerdem schwierig einzustellen und zu warten. Gewöhnlich wird die Steuerung der automatischen Tunnelwaschvorrichtungen einer Person anvertraut, die wenig Kompetenz auf dem elektronischen Gebiet hat. Die Wartung des Steuersystems, sowohl der gewöhnlichen als auch außergewöhnlichen im Fall von Defekten, muss daher einem dafür ausgebildeten Techniker anvertraut werden. Dies wirkt sich negativ auf die Kosten der Steuerung der Vorrichtung aus.

Die Motoren und die mechanischen Einrichtungen, die zum Bewegen der Halter zur Abstützung der Bürsten und der Düsen verwendet werden, unterliegen Nachteilen. Häufig sammeln sich Staub, Schlamm und durch die Bürsten oder die Wasserstrahlen von der Karosserie des Fahrzeugs entfernte Rückstände auf den Getrieben zur Drehung der Halter und zum Anheben der Querstrebe an, was Funktionsstörungen, einen übermäßigen Verschleiß der Teile, Justierungsfehler usw. verursacht.

Ein weiterer Nachteil ist durch die Tatsache gegeben, dass die Strahlen, die die Düsen der Vorwaschstation verlassen, die verschiedenen Zonen der Karosserie der Wagen in verschiedenen Winkeln treffen. Die Strahlen treffen beispielsweise die Motorhaube eines Kraftfahrzeugs mit einem Einfallswinkel (impingement angle), der in Bezug auf den Einfallswinkel derselben Strahlen, wenn sie das Verdeck oder die Windschutzscheibe desselben Kraftfahrzeugs treffen, kleiner ist. Die Wirksamkeit der Strahlen beim Reinigen der Karosserie ist daher nicht auf der ganzen Oberfläche des Fahrzeugs gleich, sondern variiert von einem Teil zum anderen Teil.

Die US-A-5613260 hat eine Vorrichtung zum Waschen von Fahrzeugen mit einer Reihe von Stationen zum Gegenstand, in welchen Phasen der Prozesse zum Waschen des Fahrzeugs durchgeführt werden, mit Mitteln zum Antrieb eines Fahrzeugs durch die Reihe von Stationen und mit einer horizontalen Bürste für die Reinigung des Fahrzeugs. Diese ist quer im Bezug auf die Richtung des Transports des Fahrzeugs an Stützmitteln montiert, welche sie in Bezug auf das Fahrzeug, welches von den Antriebsmitteln gezogen wird, abstützen. Hierbei sind Düsen vorhanden, um das angetriebene Fahrzeug mit Strahlen einer Waschflüssigkeit zu treffen, welche an Stützmitteln der horizontalen Bürste montiert sind und mit dieser in Bezug auf das Fahrzeug beweglich sind, und zwar durch Drehbarkeit längs einer Achse.

Der Zweck der vorliegenden Erfindung besteht darin, eine Vorrichtung zum Waschen von Fahrzeugen, insbesondere Kraftfahrzeugen, bereitzustellen, die in einfacher und wirksamer Weise die Nachteile der herkömmlichen Vorrichtungen beseitigt und die gleichzeitig wirtschaftlich auszuführen und zu steuern ist.

Es ist ein weiterer Zweck der vorliegenden Erfindung, eine Vorrichtung zum Waschen von Fahrzeugen, insbesondere eine automatische Tunnel- oder Portalvorrichtung, bereitzustellen, die es ermöglicht, optimale Leistungen hinsichtlich der Wirksamkeit der Reinigungsbehandlung der Fahrzeuge und hinsichtlich der maximalen Zuverlässigkeit zu erhalten.

Es ist noch ein Zweck der vorliegenden Erfindung, eine Vorrichtung zum Waschen von Fahrzeugen bereitzustellen, die mit Düsen zum Vorwaschen oder zum Spülen versehen ist, bei der die aus den Düsen gespeisten Strahlen die Oberfläche der Fahrzeuge im Wesentlichen mit derselben Wirksamkeit reinigen.

Diese und weitere Zwecke werden durch die vorliegende Erfindung erreicht, die eine Vorrichtung zum Waschen von Fahrzeugen nach Anspruch 1 betrifft.

Vorteilhafterweise sind die Düsen an der Tragstruktur der horizontalen Bürste befestigt und benötigen keine zweckgebundene eigene Tragstruktur. Die horizontale Bürste fungiert, außer dass sie die Funktion hat, die Karosserie des behandelten Fahrzeugs zu bürsten, als "Abtast"-Element, das dem Profil der Karosserie folgt, wobei die Bewegung der Querstrebe zur Abstützung der Düsen geführt wird.

Die beschriebene Konfiguration, die die Installation der Düsen an der Tragstruktur der horizontalen Bürste vorsieht, ermöglicht es, in wirksamer Weise die von den Düsen erzeugten Strahlen in Richtung des Fahrzeugs zu richten, ohne ein herkömmliches und kostspieliges zweckgebundenes System für die Steuerung der Bewegung der Düsen in Bezug auf das Fahrzeug zu verwenden. Im Allgemeinen wird daher die Querstrebe zur Abstützung der Düsen von der Struktur zur Abstützung der horizontalen Bürste mitgeführt.

Daher ist ein weiterer Gegenstand der Erfindung die Verwendung der Struktur zur Abstützung und Bewegung einer horizontalen rotierenden Bürste in einer Waschanlage als Mittel zur Abstützung und Bewegung von einer oder mehreren Düsen zum Bespritzen des Körpers des zu waschenden Fahrzeugs.

In der bevorzugten Ausführungsform der vorliegenden Erfindung wird auch die Bewegung der horizontalen Bürste nicht durch ein geeignetes Steuersystem gesteuert. Insbesondere ist die horizontale Bürste an einer Auslegerstruktur montiert, d.h., das Ende der Querstrebe zur Abstützung der Bürste ist jeweils an einer Stütze befestigt, die am oberen Teil des Tunnels oder des Portals abgestützt ist. Die Stützen sind mit Gegengewichten versehen, die am Teil gegenüber dem Scharnier in Bezug auf die horizontale Bürste angeordnet sind. Außer der Umdrehung an der Stützquerstrebe beschreibt die Bürste eine kreisförmige Bahn, die in der Richtung des Transports des Fahrzeugs, durch die Stützen geführt, schwingt.

Anfänglich befindet sich die Bürste in ihrer unteren Position, wobei sich die Auslegerstruktur durch die Wirkung ihres eigenen Gewichts in der vertikalen Position befindet. Wenn ein Kraftfahrzeug durch die Station gezogen wird und mit der horizontalen Bürste in Kontakt kommt, folgt dieselbe Bürste dem oberen Profil der Karosserie des Fahrzeugs. Mit anderen Worten, die Bürste stützt sich am Fahrzeug ab und die Auslegerstruktur schwingt durch die Wirkung des Zugs des Fahrzeugs im Transport, was die Bürste anhebt. Das Ergebnis ist, dass die Bürste, die zur Drehung aktiviert wird, die Karosserie des Fahrzeugs im Transport reinigt. Wenn das Fahrzeug die Station durchquert, schwingt die Auslegerstruktur in der Anfangsposition.

Die Bewegung der horizontalen Bürste wird nicht von Motoren, Servomechanismen und elektronischen Steuersystemen gesteuert. Die Struktur zur Abstützung der horizontalen Bürste arbeitet durch den Effekt der Schwerkraft, die auf dieselbe wirkt, und durch die Kraft, die vom Fahrzeug, das die Waschstation durchquert, auf die Bürste ausgeübt wird.

Durch die Düsen an der Auslegerstruktur der Abstützung der horizontalen Bürste ergibt sich die Waschvorrichtung äußerst vereinfacht, leicht auszuführen, zuverlässig und wirtschaftlich zu steuern.

Vorzugsweise werden die Düsen mit einer Flüssigkeit mit erhöhtem Druck, beispielsweise Wasser mit 60 - 80 bar, gespeist. Die Düsen sind in Gruppen an der betreffenden Querstrebe der Abstützung angeordnet. Jede Gruppe richtet die Wasserstrahlen in Richtung von benachbarten Teilen der Karosserie des Fahrzeugs.

Die Wirksamkeit der Strahlen beim Reinigen der Karosserie kann durch bewegliche (orientierbare) Düsen maximiert werden. Die Düsen ein und derselben Gruppe sind längs einer gemeinsamen Achse, beispielsweise einer zur Querstrebe der Stütze senkrechten Achse, angeordnet, und drehen sich um eine solche Achse durch "fächerartiges" Bewegen der Strahlen auf der Karosserie des zu waschenden Fahrzeugs.

Die Waschvorrichtung gemäß der vorliegenden Erfindung ermöglicht es, außer der Tatsache, dass sie in Bezug auf die herkömmlichen Vorrichtungen zuverlässiger ist, die behandelten Fahrzeuge wirksam zu waschen. Die Qualität des Waschprozesses wird durch die Tatsache erhöht, dass die Strahlen auf verschiedene Teile der Karosserie eines Fahrzeuges im Wesentlichen mit einem konstanten Einfallswinkel gerichtet werden.

Eine oder mehrere Düsen sind an der Abstützquerstrebe in einer Position und mit einer Orientierung montiert, so dass die jeweiligen Strahlen in Richtung der Heckscheibe und des Hecks des Fahrzeugs gerichtet werden, wenn dasselbe die Station durchführt. Mit anderen Worten, eine erste Vielzahl von Düsen ist zum Waschen des Fahrzeugs orientiert, das sich der horizontalen Bürste nähert, während eine zweite Vielzahl von Düsen in der entgegengesetzten Richtung zur ersten Vielzahl von Düsen angeordnet und orientiert ist, um das Heck des Fahrzeugs zu waschen, wenn die horizontale Bürste auf das Heck (oder die Heckscheibe) desselben einwirkt.

Die horizontale Bürste, die auf dem Fahrzeug wie ein Abtastelement (contour-follower) bewegt wird, hält die Querstrebe zur Abstützung der Düsen im Wesentlichen im gleichen Abstand von der Karosserie während ihrer Bewegung in Bezug auf das Fahrzeug (wobei die Maßschwankungen, die durch die Verformung der Borsten der Bürste bedingt sind, vernachlässigt werden). Auch der Einfallswinkel der Strahlen auf die Karosserie bleibt während der Durchfahrt der Station seitens des Fahrzeugs fast konstant, mit offensichtlichen Vorteilen hinsichtlich der Homogenität des Waschens. Die Drehbewegung der Düsen liegt in der Querrichtung zur Richtung des Transports des Fahrzeugs und modifiziert im Wesentlichen nicht den Einfallswinkel der Strahlen auf die Karosserie, was jedoch zur Optimierung der Wirksamkeit des Vorwaschprozesses beiträgt.

Weitere Aspekte und Vorteile der vorliegenden Erfindung ergeben sich deutlicher aus der folgenden Beschreibung, die zur Erläuterung und nicht zur Begrenzung mit Bezug auf die beigefügten schematischen Zeichnungen durchgeführt wird, in denen gilt:
- Figur 1 ist eine perspektivische Ansicht einer Vorrichtung zum Waschen von Fahrzeugen gemäß der vorliegenden Erfindung;
- Figur 2 ist eine Vorderansicht der in Figur 1 gezeigten Vorrichtung;
- Figur 3 ist eine Seitenansicht eines Details der in Figur 1 gezeigten Vorrichtung im Betrieb;
- Figur 4 ist eine schematische Draufsicht auf eine Vorrichtung gemäß der vorliegenden Erfindung;
- Figuren 5a-5c sind schematische Draufsichten auf die in Figur 4 gezeigte Vorrichtung;
- Figuren 6a-6c sind schematische Seitenansichten der in Figur 4 gezeigten Vorrichtung.

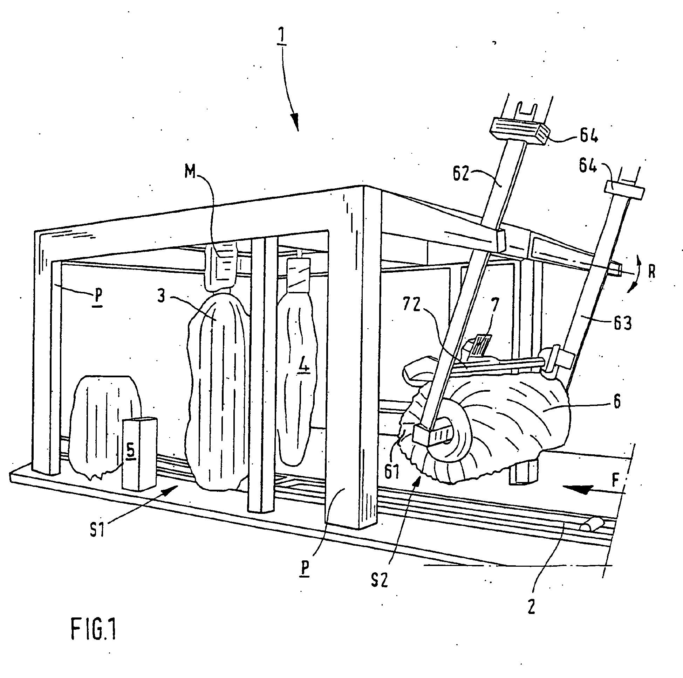

Mit Bezug auf Figur 1 ist in der Perspektive eine Waschvorrichtung 1 gemäß der vorliegenden Erfindung für Personenkraftwagen und Kraftfahrzeuge im Allgemeinen gezeigt. Die Waschvorrichtung 1 weist eine herkömmliche "Tunnel"-Struktur auf, die aus einer Folge von Portalen P gebildet ist. Eine Fördereinrichtung 2 hat die Aufgabe, den Personenkraftwagen durch die Vorrichtung 1 in der Transportrichtung F mit der erforderlichen Geschwindigkeit anzutreiben.

Die Vorrichtung umfasst eine Vielzahl von "Stationen", die jeweils zum Durchführen einer Behandlung des Waschprozesses des Fahrzeugs eingerichtet sind. Die in der Figur gezeigte Vorrichtung 1 umfasst eine erste Waschstation S1 und eine zweite Waschstation S2, die in Reihe angeordnet sind.

Die Station S1 ist mit zwei vertikalen rotierenden Bürsten 3 und 4 versehen, die jeweils durch einen Motor M betätigt werden. Die vertikalen Bürsten 3 und 4 sind an vertikalen Trägem abgestützt, für die ein geeignetes Steuersystem 5 sorgt, um sie zum Fahrzeug beim Durchgang durch die Station S1 zusammenzuschieben. Die vertikalen Bürsten bewirken die Reinigung der Seiten des Fahrzeugs.

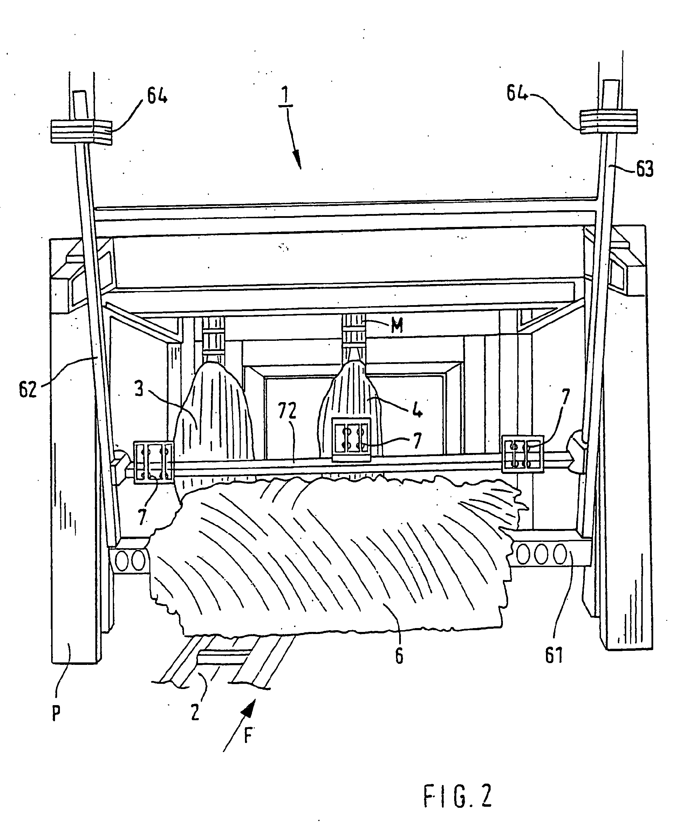

Die Waschstation S2 ist mit einer horizontalen rotierenden Bürste 6 versehen, die in der Querrichtung in Bezug auf die Laufrichtung F des zu waschenden Fahrzeugs abgestützt ist. Die Figur 2 ist eine Vorderansicht der Vorrichtung 1, die die Station S2 im Detail zeigt.

Die horizontale Bürste 6 hat die Aufgabe, die Reinigung des oberen Teils der Karosserie des Fahrzeugs, ausgehend vom Kühlergrill und fortschreitend zur Motorhaube, zur Windschutzscheibe, zum Verdeck, zur Heckscheibe und zum Heck des Fahrzeugs, durchzuführen.

Im Allgemeinen kann die Bürste 6 an einer herkömmlichen Struktur mit vertikalem Gleiten abgestützt sein. Vorzugsweise ist die horizontale rotierende Bürste an einer Auslegerstützstruktur abgestützt, wie in Figur 1 und 2 gezeigt.

Die Auslegerstruktur umfasst eine Querstrebe 61 zur Abstützung der Bürste 6 (die Bürste rotiert an der Querstrebe 61), die an ihren Enden an zwei Stützen 62 und 63 befestigt ist. Die Stützen 62, 63 sind ihrerseits am Portal P der Station S2 abgestützt, um sich frei um die Achse R drehen zu können. Mit anderen Worten, die Stützen 62, 63 und die Abstützquerstrebe 61 sind an der Struktur P der Vorrichtung 1 befestigt, um wie ein Pendel längs der Richtung F schwingen zu können.

An den Stützen 62 und 63, am Ende entgegengesetzt zur Querstrebe 61 in Bezug auf den Stützpunkt, sind geeignete Gegengewichte 64, beispielsweise Zementblöcke, befestigt. Die Gegengewichte gleichen das Gewicht der Stützstruktur in Bezug auf die Drehachse R aus.

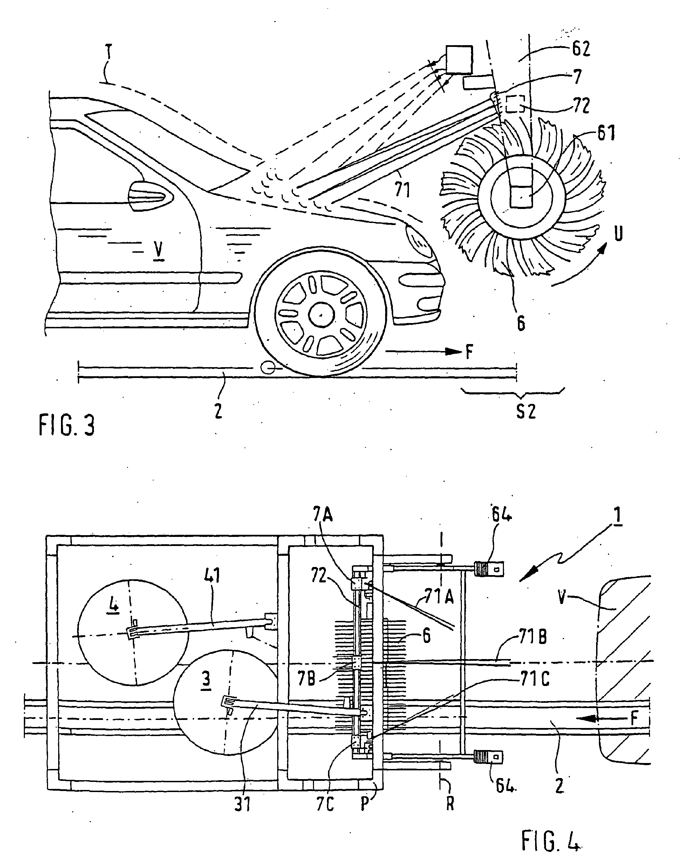

Die Auslegerstruktur, die die horizontale Bürste 6 abstützt, wird vom Fahrzeug beim Waschen in Rotation geschoben. Figur 3 zeigt in schematischer Weise ein Kraftfahrzeug V in der Nähe der Waschstation S2. Wenn der Vorderteil des Fahrzeugs V mit der Bürste 6 in Kontakt kommt, "steigt" dieselbe Bürste die Karosserie des Fahrzeugs hinauf. Mit anderen Worten, die Bürste 6, die sich anfänglich in ihrer Position mit minimaler Höhe in Bezug auf den Boden befindet, wird in der Richtung U durch die Wirkung des Schubs angehoben, den das Fahrzeug V auf die Auslegerstützstruktur ausübt, die sich nach oben dreht. Wenn das Kraftfahrzeug V durch die Station S2 fortschreitet, folgt die Bürste 6 dem Profil seiner Karosserie wie ein "Abtast"-Element (contour-follower), wobei sie eine Bahn T in Bezug auf das Fahrzeug V beschreibt.

Vorteilhafterweise erfordert die Bewegung des Auslegersystems, das die horizontale Bürste 6 abstützt, nicht den Eingriff eines Steuersystems, das momentan die Position der Bürste in Bezug auf das Fahrzeug feststellt, zum Durchführen von eventuellen Kompensationen der vorher festgelegten Parameter. Die Stützstruktur der Bürste 6 wird genau "ausgeglichen" und die Schwingungen sind das Ergebnis eines wesentlichen Gleichgewichts zwischen der Schwerkraft, die auf dieselbe Struktur (Gruppe 6, 61, 62, 63) wirkt, und ihren Gegengewichten 64 und dem vom Fahrzeug V auf die Bürste 6 ausgeübten Schub.

Die Struktur der Station S2 ist daher äußerst einfach zu verwirklichen und einzustellen. Auch die Wartung der Station S2 ist einfach durchzuführen, da keine komplizierten Sensoren oder eine Steuereinheit vorhanden sind.

Vorteilhafterweise ist die Vorrichtung 1 gemäß der vorliegenden Erfindung mit einer Vielzahl von Düsen 7 versehen, die an der Stützstruktur der horizontalen Bürste 6 montiert sind, um Strahlen 71 einer Waschflüssigkeit in Richtung des Fahrzeugs V zu richten.

Die Waschflüssigkeit kann Wasser, Waschmittel oder ein Gemisch der zwei sein. Vorzugsweise werden die Düsen 7 mit Wasser mit hohem Druck, das beispielsweise im Intervall von 60-80 bar komprimiert ist, versorgt.

Die Düsen 7, die zum Vorwaschen des Fahrzeugs V vorgesehen sind, nämlich die Funktion haben, ein anfängliches Waschen der Karosserie des Fahrzeugs vor dem Eingriff der Bürste 6 durchzuführen, bewegen sich mit derselben Bürste 6 in Bezug auf das Fahrzeug V. Die Düsen 7 sind vorzugsweise in Gruppen an einer Querstrebe 72 angeordnet, die mit den Stützen 62, 63 des Auslegersystems fest verbunden ist, das die horizontale Bürste 6 abstützt. In dieser Form arbeiten die Düsen in optimaler Weise, ohne dass es erforderlich ist, ein geeignet zur Regelung der Bewegung zweckgebundenes Steuersystem einzurichten, wie jedoch in den herkömmlichen Vorrichtungen vorgesehen.

Ein weiterer Vorteil, den die Vorrichtung 1 gegenüber den herkömmlichen Lösungen beansprucht, liegt in der Tatsache, dass die Strahlen 71 auf die Karosserie des Fahrzeugs V im Wesentlichen in einem konstanten oder zwischen einem Intervall von wenigen Graden variablen Einfallswinkel auftreffen. Mit Bezug auf Figur 3 werden, wenn die horizontale Bürste 6 der Bahn T in Bezug auf die Karosserie des in Bewegung befindlichen Fahrzeugs V folgt, die Düsen 7 mit der Bürste bewegt und folgen dem Verlauf der Kontur des Fahrzeugs V, wobei sie immer im gleichen Abstand bleiben (wobei die Maßschwankungen der Borsten der Bürste 6 vernachlässigt werden). Auch die Orientierung der Düsen in Bezug auf die verschiedenen Teile der Karosserie bleibt beim Durchgang des Fahrzeugs V im Wesentlichen unverändert. Die Windschutzscheibe des Fahrzeugs ist beispielsweise in Bezug auf die Motorhaube geneigt. Die Strahlen 71 treffen auf die Motorhaube des Fahrzeugs V in Figur 3 mit einem Einfallwinkel von ungefähr 40° auf. Wenn die Bürste 6 angehoben wird, um die Motorhaube des Wagens zu reinigen, werden auch die Düsen 7 angehoben und die Strahlen 71 werden auf die Windschutzscheibe mit einem Einfallswinkel gleich ungefähr 43° umgelenkt, daher mit einer minimalen Variation in Bezug auf den vorhergehenden Wert, der für das Waschen der Motorhaube vorgesehen ist. Die Wirksamkeit des Waschens, die mit den Strahlen 71 erhältlich ist, ist daher für die verschiedenen Bereiche der Karosserie des Fahrzeugs V gleichmäßig.

Figur 4 ist eine Prinzipskizze der Vorrichtung 1 von oben gesehen. Es sind die Stützhalter 31 und 41 der vertikalen Bürsten 3 bzw. 4 und die Fördereinrichtung 2 sichtbar. Die Düsen 7 sind in drei Gruppen 7A-7C an der Stützquerstrebe 72 angeordnet. Die Gruppe 7A richtet einen Strahl 71A in Richtung des Fahrzeugs V, der aus mehreren Strahlen 71 gebildet ist. Analog richten die Gruppen 7B und 7C die Strahlen 71B und 71C.

Der mittlere Strahl 71B ist auf das Fahrzeug V ausgerichtet, während die seitlichen Strahlen 71° und 71C zu diesem konvergieren.

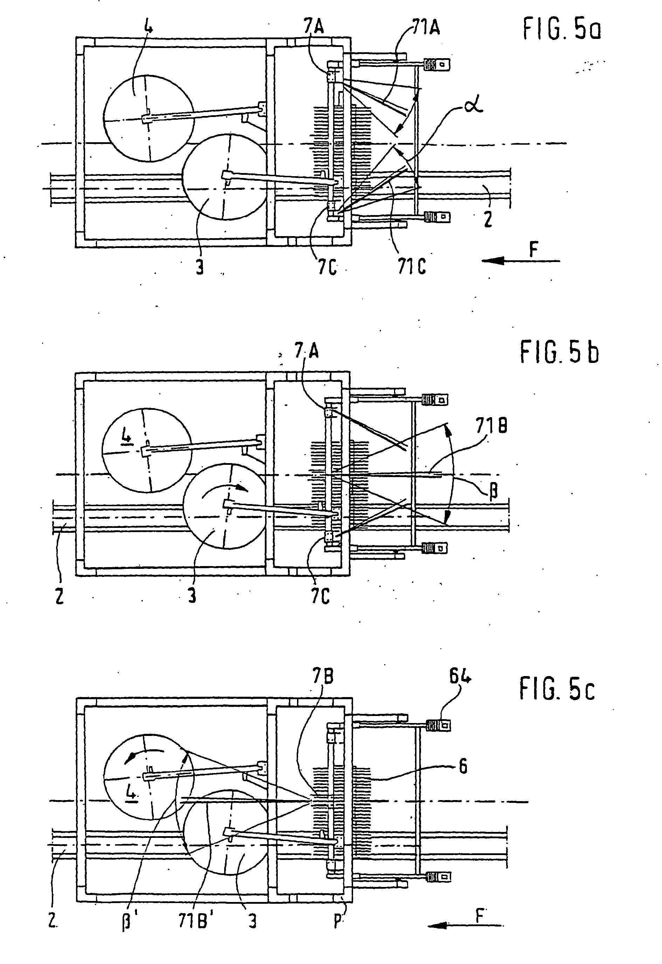

Die Düsen 7 sind um eine Achse drehbar, um die jeweiligen Strahlen 71 zu verstellen. Vorzugsweise ist jede Gruppe von Düsen 7A-7C um eine Achse drehbar, die zur Querstrebe 72 senkrecht ist. Die Figuren 5a und 5b zeigen jeweils den Winkel α der Schwingung der Strahlen 71A bis 71C und den Winkel β der Schwingung des vorderen Strahls 71B.

Vorteilhafterweise ist die Vorrichtung 1 mit einigen Düsen 7' versehen, die so orientiert sind, dass die jeweiligen Strahlen 71 in Richtung des Hecks des Fahrzeugs gerichtet werden, das sich dem Durchgang der Station S2 nähert.

Figur 5c stellt den Schwingungswinkel β' des mittleren hinteren Strahls 71B' dar, der die Funktion hat, den hinteren Teil des Fahrzeugs V beim Verlassen der Station S2 zu waschen.

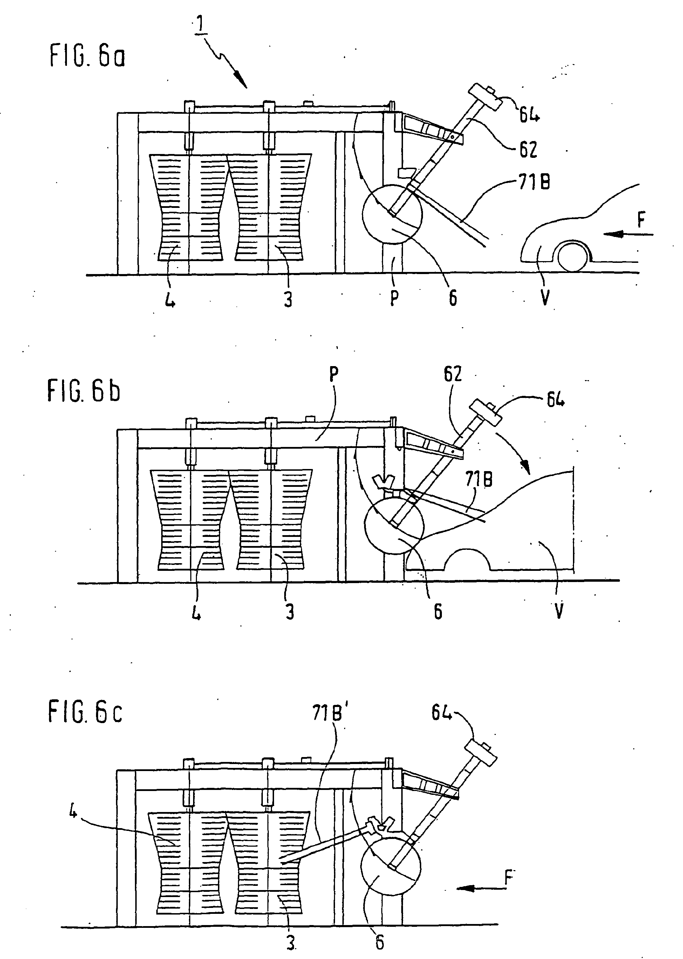

Die Figuren 6a-6c sind schematische seitliche Ansichten der Vorrichtung 1. Insbesondere ist in Figur 6a der Drehradius der Auslegerstruktur, die die horizontale Bürste 6 abstützt, während der Schwingung am Fahrzeug V angegeben. Es ist die Funktion des Ausgleichs des Umschwunggewichts der Gegengewichte 64 ersichtlich, die an den Enden der Stützen 62 und 63 befestigt sind. Die Figur 6a zeigt das Fahrzeug V beim Transport in Richtung der horizontalen Bürste 6 in seiner abgesenkten Ruheposition. Die Figur 6b zeigt das Fahrzeug V, während es mit der zur Drehung aktivierten Bürste 6 in Kontakt tritt. Der weitere Transport des Fahrzeugs V bestimmt die Schwingung der Stützen 62, 63 der Stützstruktur der Bürste 6, welche beginnt, dem Profil der Karosserie des Fahrzeugs zu folgen. Wenn das Fahrzeug die Bürste 6 durchfährt, beispielsweise wenn die Bürste die Reinigung der Heckscheibe des Fahrzeugs durchführt, werden die hinteren Düsen 7B (Figur 6c) aktiviert, die dafür sorgen, dass der mittlere hintere Strahl 71B' gerichtet wird.

Die Vorrichtung 1 hat eine äußerst einfache Struktur und ihre Funktion erfordert nicht die Verwendung von kostspieligen und komplizierten elektronischen Steuersystemen. Die Leistungen der Vorrichtung hinsichtlich der Wirksamkeit der Behandlung der Reinigung der Fahrzeuge sind erhöht. Die Zuverlässigkeit der Vorrichtung ist beachtlich und die Wartung ist einfach und kann von nicht spezialisiertem Personal durchgeführt werden.

## Patentansprüche

1. Vorrichtung (1) zum Waschen von Fahrzeugen (V) mit einer Reihe von Stationen (S1, S2), in denen Phasen der Prozesse zum Waschen des Fahrzeugs (V) durchgeführt werden, mit Mitteln zum Antrieb (2) eines Fahrzeugs (V) durch die Reihe von Stationen (S1, S2) und mindestens einer horizontalen Bürste (6) für die Reinigung des Fahrzeugs (V), wobei die horizontale Bürste (6) quer in Bezug auf die Richtung (F) des Transports des Fahrzeugs (V) an Stützmitteln (61, 62, 63) montiert ist, die sie in Bezug auf das Fahrzeug (V), das von den Antriebsmitteln (2) gezogen wird, abstützen, wobei in mindestens einer (S2) der Stationen eine Vielzahl von Düsen (7) vorhanden sind, um das angetriebene Fahrzeug (V) mit Strahlen (71) einer Waschflüssigkeit zu treffen, wobei die Düsen (7) an Stützmitteln (62, 63) der mindestens einen horizontalen Bürste (6) montiert sind und mit dieser in Bezug auf das Fahrzeug (V) beweglich sind und wobei die Düsen (7) in Gruppen vorliegen und längs einer Achse angeordnet sind, **dadurch gekennzeichnet, dass** die Düsen um die Achse herum drehbar sind und die Achse von jeder Gruppe von Düsen zur Achse der horizontalen Bürste (6) senkrecht ist und die Strahlen (71) der Waschflüssigkeit um einen Winkel (α,β β') schwingen.

2. Vorrichtung nach Anspruch 1, **dadurch gekennzeichnet, dass** die horizontale Bürste drehbar an einer vorderen Querstrebe (61) montiert ist, die vertikal an der Struktur der Vorrichtung (1) gleitet.

3. Vorrichtung nach Anspruch 1, **dadurch gekennzeichnet, dass** die horizontale Bürste (6) drehbar an einer vorderen Querstrebe (61) montiert ist, die an den Enden von Stützen (62, 63) gehalten wird, die an einem Portal (P) abgestützt sind und mit Gegengewichten (64) versehen sind, um ein Auslegersystem zu bilden.

4. Vorrichtung nach Anspruch 3, **dadurch gekennzeichnet, dass** das Auslegersystem in der Richtung (F) des Transports des Fahrzeugs unter dem Schub schwingt, der vom Fahrzeug (V) auf die horizontale Bürste (6) ausgeübt wird.

5. Vorrichtung nach Anspruch 3 oder Anspruch 4, **dadurch gekennzeichnet, dass** die Düsen (7) an einer zweiten Querstrebe (72) montiert sind, die an den Stützen (62, 63) in einer Zwischenposition in Bezug auf die Bürste (6) und die Drehachse (R) der Stützen (62, 63) befestigt sind.

6. Vorrichtung nach einem der vorangehenden Ansprüche 1-5, **dadurch gekennzeichnet, dass** die Düsen (7) in Gruppen vorliegen und längs einer Achse angeordnet sind, wobei sie um diese herum drehbar sind.

7. Vorrichtung nach einem der vorangehenden Ansprüche 1-6, **dadurch gekennzeichnet, dass** die Düsen mit der Waschflüssigkeit gespeist werden, deren Druck im Intervall von 20 - 100 bar liegt.

8. Vorrichtung nach einem der vorangehenden Ansprüche 1-7, **dadurch gekennzeichnet, dass** die Düsen (7) zum Richten der Strahlen (71) der Waschflüssigkeit auf das Fahrzeug (V) mit einem im Wesentlichen konstanten Einfallswinkel orientiert sind.

9. Vorrichtung nach einem der vorangehenden Ansprüche 1-8, **dadurch gekennzeichnet, dass** mindestens eine Düse (7) zum Richten des Strahls der Waschflüssigkeit auf den hinteren Teil des Fahrzeugs (V) orientiert ist.

## Claims

1. Device (1) for washing vehicles (V) with a row of stations (S1, S2) in which phases of the processes for washing the vehicle (V) are carried out, with means for driving (2) a vehicle (V) through the row of stations (S1, S2) and at least one horizontal brush (6) for cleaning the vehicle (V), with the horizontal brush (6) mounted transversely in relation to the direction (F) of transport of the vehicle (V) on supporting means (61, 62, 63) which support it in relation to the vehicle (V) which is pulled by the driving means (2), with a plurality of nozzles (7) arranged in at least one (S2) of the stations in order to strike the driven vehicle (V) with jets (71) of a washing liquid, with the nozzles (7) mounted on supporting means (62, 63) of the at least one horizontal brush (6) and being moveable with the latter in relation to the vehicle (V) and with the nozzles (7) arranged in groups and disposed along an axis, **characterised in that** the nozzles are pivotable about the axis and the axis of each group of nozzles is perpendicular to the axis of the horizontal brush (6) and the jets (71) of the washing liquid swing about an angle (α, β β').

2. Device according to claim 1, **characterised in that** the horizontal brush is mounted pivotable on a front transverse brace (61) which slides vertically on the structure of the device (1).

3. Device according to claim 1, **characterised in that** the horizontal brush (6) is mounted pivotable on a front transverse brace (61) which is held at the ends of supports (62, 63) which are supported on a portal (P) and provided with counterweights (64) to form an outrigger system.

4. Device according to claim 3, **characterised in that** the outrigger system swings in the direction (F) of transport of the vehicle under the thrust exerted by the vehicle (V) on the horizontal brush (6).

5. Device according to claim 3 or 4, **characterised in that** the nozzles (7) are mounted on a second transverse brace (72) which is fastened to the supports (62, 63) in an intermediate position in relation to the brush (6) and the rotation axis (R) of the supports (62, 63).

6. Device according to one of the preceding claims 1 to 5, **characterised in that** the nozzles (7) are disposed in groups and arranged along an axis, around which they are pivotable.

7. Device according to one of the preceding claims 1 to 6, **characterised in that** the nozzles are fed with the washing liquid the pressure of which lies in the range from 20 to 100 bar.

8. Device according to one of the preceding claims 1 to 7, **characterised in that** the nozzles (7) are orientated with an essentially constant angle of incidence to direct the jets (71) of washing liquid on to the vehicle (V).

9. Device according to one of the preceding claims 1 to 8, **characterised in that** at least one nozzle (7) is orientated to direct the jet of washing liquid on to the rear part of the vehicle (V).

## Revendications

1. Installation (1) pour le lavage de véhicules (V) avec une série de postes (S1, S2), dans lesquels sont réalisées des phases des processus pour le lavage du véhicule (V), avec des moyens pour l'entraînement (2) d'un véhicule (V) par la série de postes (S1, S2) et au moins une brosse horizontale (6) pour le nettoyage du véhicule (V), la brosse horizontale (6) étant montée transversalement par rapport à la direction (F) du transport du véhicule (V) sur des moyens d'appui (61, 62, 63) qui s'appuient par rapport au véhicule (V) qui est tiré par les moyens d'entraînement (2), dans au moins l'un (S2) des postes étant présente une pluralité de buses (7) afin de toucher le véhicule (V) entraîné avec des jets (71) d'un liquide de lavage, les buses (7) étant montées sur des moyens d'appui (62, 63) de l'au moins une brosse horizontale (6) et étant mobiles avec celle-ci par rapport au véhicule (V) et les buses (7) se présentant en groupes et étant disposées le long d'un axe, **caractérisée en ce que** les buses peuvent être tournées autour de l'axe et **en ce que** l'axe de chaque groupe de buses est perpendiculaire à l'axe de la brosse horizontale (6) et **en ce que** les jets (71) du liquide de lavage oscillent selon un angle (α, β, β').

2. Installation selon la revendication 1, **caractérisée en ce que** la brosse horizontale est montée de manière à pouvoir tourner sur une entretoise (61) avant qui glisse verticalement sur la structure de l'installation (1).

3. Installation selon la revendication 1, **caractérisée en ce que** la brosse horizontale (6) est montée de manière à pouvoir tourner sur une entretoise (61) avant qui est maintenue sur les extrémités des appuis (62, 63) qui sont en appui contre un portique (P) et sont pourvus de contrepoids (64) afin de former un système d'avant-bras.

4. Installation selon la revendication 3, **caractérisée en ce que** le système d'avant-bras oscille dans la direction (F) du transport du véhicule sous la poussée exercée par le véhicule (V) sur la brosse horizontale (6).

5. Installation selon la revendication 3 ou 4, **caractérisée en ce que** les buses (7) sont montées sur une seconde entretoise (72), lesquelles sont fixées sur les appuis (62, 63) dans une position intermédiaire par rapport à la brosse (6) et l'axe de rotation (R) des appuis (62, 63).

6. Installation selon l'une quelconque des revendications 1 à 5, **caractérisée en ce que** les buses (7) se présentent en groupes et sont disposées le long d'un axe, autour duquel celles-ci pouvant être tournées.

7. Installation selon l'une quelconque des revendications 1 à 6, **caractérisée en ce que** les buses sont alimentées en liquide de lavage, dont la pression est comprise entre 20 et 100 bars.

8. Installation selon l'une quelconque des revendications 1 à 7, **caractérisée en ce que** les buses (7) sont orientées pour diriger les jets (71) de liquide de lavage sur le véhicule (V) avec un angle d'incidence essentiellement constant.

9. Installation selon l'une quelconque des revendications 1 à 8, **caractérisée en ce qu'**au moins une buse (7) est orientée pour diriger le jet du liquide de lavage sur la partie arrière du véhicule (V).
